# FASCICULE DE BREVET EUROPEEN

(11) **EP 3 842 335 B1**
(45) Date de publication et mention de la délivrance du brevet: **28.09.2022**
(21) Numéro de dépôt: 20215906.7
(22) Date de dépôt: 21.12.2020
(51) Int. Cl.: B64C 1/18, B64D 11/06

(54) **STRUCTURE DE PLANCHER POUR AÉRONEF À ÉLÉMENT DE RECOUVREMENT DE RAIL SOUTENU PAR UNE STRUCTURE ALVÉOLAIRE**
BODENSTRUKTUR FÜR LUFTFAHRZEUG MIT EINEM SCHIENENABDECKELEMENT, DAS VON EINER WABENSTRUKTUR GETRAGEN WIRD
FLOOR STRUCTURE FOR AN AIRCRAFT WITH RAIL COVERING ELEMENT SUPPORTED BY A HONEYCOMB STRUCTURE

(30) Priorité: 27.12.2019 FR 1915656
(43) Date de publication de la demande: 30.06.2021
(73) Titulaire: Airbus, 31700 Blagnac (FR); Airbus Operations SAS, 31060 Toulouse (FR)
(72) Inventeur: GODENZI, Christian, 31060 TOULOUSE (FR); CORVI, Jean-Michel, 31700 BLAGNAC CEDEX (FR); SANPONS, Thomas, 31060 TOULOUSE (FR)
(74) Mandataire: Cabinet Le Guen Maillet

(56) Documents cités:
- EP-A1- 2 842 866
- FR-A1- 2 891 239
- FR-A1- 2 891 325
- US-A1- 2011 095 572
- US-A1- 2019 308 670

## Description

### DOMAINE TECHNIQUE

La présente invention concerne une structure de plancher pour aéronef, présentant, d'un côté supérieur, une surface portante, et comportant au moins un rail définissant un logement présentant une ouverture du côté supérieur et un fond opposé à l'ouverture, pour permettre la réception d'éléments de fixation au sein du logement.

L'invention concerne également un procédé de fabrication d'une telle structure de plancher.

### ÉTAT DE LA TECHNIQUE ANTÉRIEURE

US2019/308670 A1 décrit un système de rail pour une cabine de véhicule.

Il est connu de fixer des sièges et des monuments, tels que des tables, armoires, toilettes, ou plus généralement tous types de meubles, à la structure de plancher d'un aéronef, au moyen d'éléments de fixation engagés et retenus dans des logements définis par des rails de la structure de plancher.

La majeure partie de chacun de ces logements demeure libre de tout élément de fixation et est recouverte par un ou plusieurs éléments de recouvrement permettant de constituer une surface portante complémentaire permettant la circulation de personnes et de chariots au-dessus des logements, par exemple dans une allée de circulation.

Toutefois, du fait qu'un tel élément de recouvrement s'étend en porte-à-faux au-dessus du logement correspondant, l'élément de recouvrement est prévu relativement épais de manière à présenter des caractéristiques mécaniques suffisantes pour éviter l'affaissement de l'élément de recouvrement dans le logement.

Par conséquent, un tel élément de recouvrement génère une marche par rapport à la surface portante.

Une telle marche n'est évidemment pas souhaitable pour des questions de confort, mais également du fait que le revêtement qui recouvre en général la structure de plancher, y compris l'élément de recouvrement précité, risque d'être endommagé par le passage répété de personnes et de chariots, en particulier au niveau des extrémités de l'élément de recouvrement.

### EXPOSÉ DE L'INVENTION

L'invention a notamment pour but d'apporter une solution simple, économique et efficace à ce problème.

Elle propose à cet effet une structure de plancher pour aéronef, présentant, d'un côté supérieur, une surface portante, et comportant :
- au moins un rail délimitant un logement présentant au moins une ouverture du côté supérieur et un fond opposé à l'ouverture et destiné à loger un ou plusieurs éléments de fixation ; et
- au moins un élément de recouvrement agencé au-dessus d'au moins un segment du rail de manière à procurer une surface portante complémentaire au-dessus de l'ouverture.

Selon l'invention, la structure de plancher comporte au moins une structure alvéolaire de support présentant une première extrémité reposant sur le fond du logement, et une deuxième extrémité opposée à la première extrémité et supportant l'élément de recouvrement.

Le soutien de l'élément de recouvrement par la structure alvéolaire de support rend possible une réduction de l'épaisseur de l'élément de recouvrement.

Il en résulte une réduction de la marche générée par rapport à la surface portante, voire une absence totale de marche par rapport à la surface portante.

Le confort est ainsi accru pour les usagers. Le cas échéant, la durée de vie du revêtement disposé sur la structure de plancher est rallongée du fait de l'absence d'endommagements lors des passages répétés au-dessus du rail.

Le caractère alvéolaire de la structure alvéolaire de support permet, au moins, une limitation de la masse de ladite structure.

De préférence, la structure alvéolaire de support comporte des alvéoles s'étendant selon une direction allant de la première extrémité vers la deuxième extrémité de ladite structure.

De préférence, un produit anticorrosion est disposé dans le logement au moins sous la structure alvéolaire de support et de part et d'autre de la structure alvéolaire de support.

Dans les structures de plancher connues, un tel logement peut être sujet à la corrosion, notamment du fait de la présence potentielle de liquides stagnants et d'humidité condensée. Aussi, il est connu de disposer un produit anticorrosion dans un tel logement afin de limiter les problèmes de corrosion.

La structure alvéolaire de support permet, par le volume qu'elle occupe au sein de logement, de limiter la quantité de produit anticorrosion requis.

Dans le cas où les alvéoles de la structure sont traversantes et s'étendent selon une direction allant de la première extrémité vers la deuxième extrémité de ladite structure, la structure alvéolaire de support permet d'assurer une répartition homogène du produit anticorrosion au sein du logement, et se révèle donc particulièrement bien compatible avec l'utilisation d'un tel produit.

Dans un mode de réalisation de l'invention, l'élément de recouvrement est formé d'un seul tenant avec la structure alvéolaire de support.

Dans une autre mode de réalisation de l'invention, l'élément de recouvrement est formé indépendamment de la structure alvéolaire de support.

De préférence, l'élément de recouvrement affleure la surface portante.

De préférence, la structure de plancher comprend au moins deux panneaux de plancher définissant la surface portante, et le rail s'étend dans un espace défini entre les deux panneaux de plancher.

De préférence, l'élément de recouvrement est logé dans l'espace défini entre les deux panneaux de plancher.

De préférence, le logement est une rainure définie par le rail, et l'ouverture est une ouverture longitudinale définie entre deux lèvres supérieures du rail.

De préférence, l'ouverture du logement est de section transversale plus étroite qu'une section transversale maximale du logement définie entre l'ouverture et le fond du logement de manière à permettre la rétention d'éléments de fixation au sein du logement par effet de butée.

L'invention concerne également un aéronef, comprenant une structure de plancher du type décrit ci-dessus.

L'invention concerne aussi un procédé de fabrication d'une structure de plancher pour aéronef, comprenant des étapes de :
A) mise à disposition d'un rail définissant un logement présentant une ouverture d'un côté supérieur et un fond opposé à l'ouverture et destiné à loger un ou plusieurs éléments de fixation ;
B) intégration du rail dans une structure de plancher de base présentant, d'un côté supérieur, une surface portante, de telle sorte que l'ouverture du logement du rail débouche dans la surface portante ;
C) mise en place, avant ou après l'étape B, d'une structure alvéolaire de support dans au moins un segment du logement du rail, de telle sorte que la structure alvéolaire de support présente une première extrémité reposant sur le fond du logement, et une deuxième extrémité opposée à la première extrémité ;
   et dans lequel, au terme du procédé, au moins un élément de recouvrement est supporté par la deuxième extrémité de la structure alvéolaire de support, de manière à procurer une surface portante complémentaire au-dessus de l'ouverture du logement.

De préférence, le procédé comprend en outre une étape d'agencement d'un produit anticorrosion dans le logement au moins sous la structure alvéolaire de support et de part et d'autre de la structure alvéolaire de support.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique de côté d'un aéronef;
- la figure 2 est une vue schématique partielle en section transversale d'une structure de plancher d'aéronef d'un type connu ;
- la figure 3 est une vue schématique partielle en section transversale d'une structure de plancher selon un premier mode de réalisation préféré de l'invention, faisant partie de l'aéronef de la figure 1 ;
- la figure 3A est une vue à plus grande échelle d'une partie de la figure 3 ;
- la figure 4 est une vue schématique en perspective d'une structure alvéolaire de support appartenant à la structure de plancher de la figure 3 ;
- la figure 5 est une vue schématique partielle en perspective de la structure de plancher de la figure 3 ;
- la figure 6 est une vue semblable à la figure 5, d'une structure de plancher selon un deuxième mode de réalisation préféré de l'invention ;
- la figure 7 est une vue schématique en perspective d'une structure alvéolaire de support appartenant à la structure de plancher de la figure 6 ;
- la figure 8 est une vue semblable à la figure 3A, illustrant une variante de l'invention ;
- la figure 9 est un organigramme illustrant un procédé de fabrication d'une structure de plancher selon les modes de réalisation préférés de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

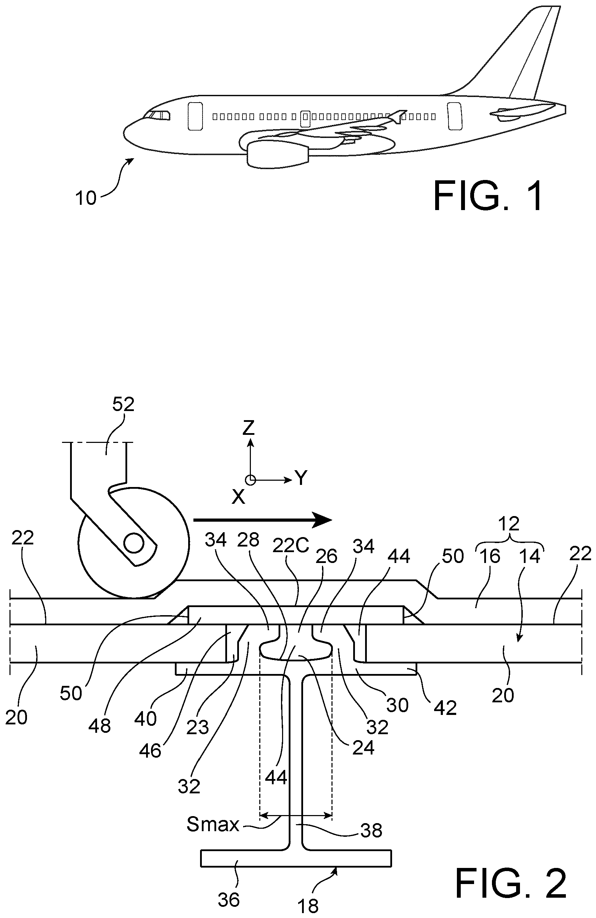

La figure 1 illustre un aéronef 10, par exemple un avion du type destiné au transport commercial de passagers ou de fret.

Le plancher 12 d'un tel aéronef, dans une configuration connue illustrée sur la figure 2, comporte une structure de plancher 14 recouverte par un revêtement 16, par exemple du type non-textile, également dénommé NTF (pour *« non-textile floor »).* Un tel revêtement est par exemple réalisé en PLA (acide polylactique), ABS (acrylonitrile butadiène styrène), PET (polyéthylène téréphtalate) ou autres.

La structure de plancher 14 comporte typiquement un ensemble de rails 18 sur lesquels sont montés des panneaux de plancher 20 définissant conjointement une surface portante 22, d'un côté supérieur de la structure de plancher 14. Dans la présente description, la direction verticale Z, les côtés « supérieur » et « inférieur », de même que les directions « haut » et « bas », sont définis de manière conventionnelle par référence à l'orientation de l'aéronef lorsque celui-ci est au sol. Les directions X et Y sont orientées orthogonalement à la direction verticale Z de manière à définir un référentiel orthonormé. En particulier, la direction X est définie en tant que direction longitudinale des rails 18, et la direction Y est définie en tant que direction latérale.

Chaque rail 18 s'étend ainsi dans un espace 23 défini entre deux panneaux de plancher 20 consécutifs.

En particulier, chaque rail 18 délimite au moins le côté supérieur d'un logement 24 présentant une ouverture 26 du côté supérieur, et un fond 28 du côté opposé, en regard de l'ouverture 26, pour loger un ou plusieurs éléments de fixation au sein du logement 24. De tels éléments de fixation permettent la fixation de sièges et de monuments, tels que des tables, armoires, toilettes, séparateurs (« dividers » en anglais) ou plus généralement tous types de meubles, à la structure de plancher 14.

Dans le mode de réalisation illustré, l'ouverture 26 est de section plus étroite qu'une section maximale Smax du logement 24, définie entre l'ouverture 26 et le fond 28 du logement, de sorte que le rail puisse retenir des éléments de fixation par effet de butée, c'est-à-dire en formant butée à rencontre d'un déplacement de tels éléments de fixation vers le haut hors du logement 24.

À cet effet, chaque rail 18 dans l'exemple illustré comporte une semelle supérieure 30 définissant le fond 28 du logement 24, ainsi que deux lèvres 32 s'étendant vers le haut à partir de la semelle supérieure 30 et présentant des extrémités libres 34 respectives recourbées l'une vers l'autre et délimitant entre leurs bords 35 respectifs l'ouverture 26 du logement 24 du rail. La semelle supérieure 30 et les deux lèvres 32 forment ainsi globalement une section en forme de « C » permettant la retenue des éléments de fixation précités par un effet de butée produit par les lèvres 32. Le logement 24 défini par le rail 18 est ainsi une rainure entièrement délimitée par ledit rail, et l'ouverture présente une forme générale longitudinale.

Dans l'exemple illustré, chaque rail 18 comporte en outre une semelle inférieure 36, ainsi qu'une âme 38 reliant la semelle supérieure 30 à la semelle inférieure 36. De plus, la semelle supérieure 30 se prolonge de part et d'autre du logement 24 de manière à former deux brides latérales 40 et 42 sur lesquelles reposent des panneaux de plancher 20 adjacents au rail 18 considéré.

En pratique, une majeure partie du logement 24 de chaque rail 18 demeure vide d'élément de fixation. Pour éviter la corrosion du rail 18, notamment du fait de la présence potentielle de liquides stagnants et d'humidité condensée dans le logement 24 ou entre le rail 18 et les panneaux de plancher 20 adjacents, du produit anticorrosion 44 est disposé de manière à remplir le logement 24 ainsi que les espaces 46 formés entre le rail 18 et les panneaux de plancher 20 adjacents. De cette manière, en particulier, toutes les surfaces délimitant le logement 24 sont recouvertes par le produit anticorrosion 44 et sont ainsi protégées contre la corrosion.

Par ailleurs, pour permettre une circulation sans encombre de passagers et de chariots au-dessus de chaque rail 18, un élément de recouvrement 48 est disposé de manière à recouvrir le rail 18, en particulier le logement 24, de manière à procurer une surface portante complémentaire 22C au-dessus de l'ouverture 26. L'élément de recouvrement 48, qui est par exemple constitué d'une structure laminée de matériau composite à base de fibres de verre, est ainsi interposé entre le rail 18 et le revêtement 16 du plancher 12. Dans l'exemple typique illustré sur la figure 2, l'élément de recouvrement 48 présente des extrémités latérales opposées reposant respectivement sur les panneaux de plancher 20 adjacents au rail 18, de sorte que l'élément de recouvrement 48 recouvre également les espaces 46 formés entre le rail 18 et les panneaux de plancher 20 adjacents.

Pour limiter les risques d'affaissement de l'élément de recouvrement 48, celui-ci présente une rigidité adéquate et doit, de ce fait, présenter une épaisseur notable. Par conséquent, l'élément de recouvrement 48 forme une marche 50 à chacune de ses extrémités latérales, par rapport à la surface portante 22.

Outre l'inconfort provoqué par une telle marche, des passages répétés de personnes, et surtout de chariots 52, sur une telle marche, provoquent à la longue des endommagements du revêtement 16.

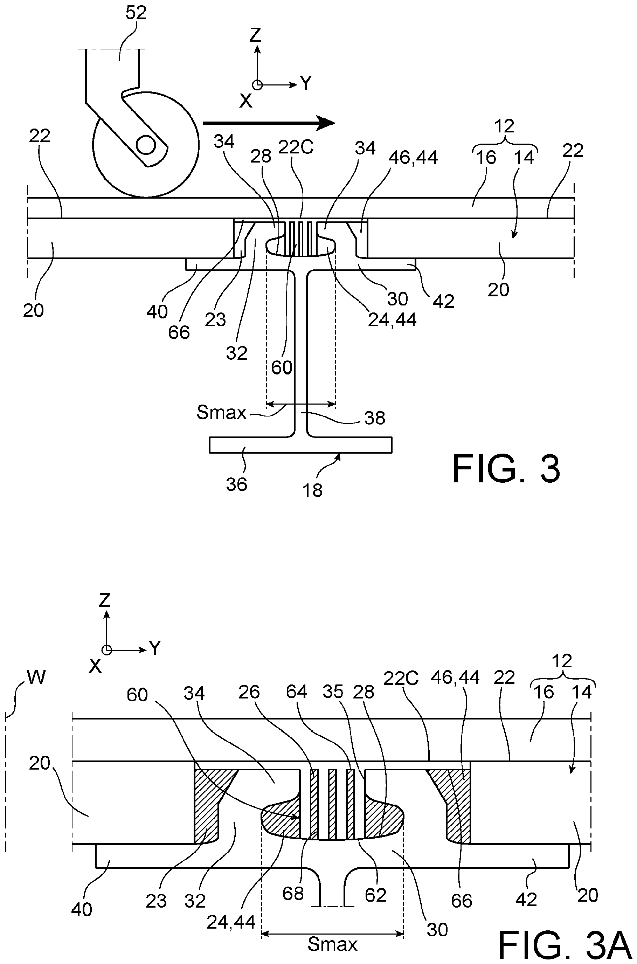

L'invention, qui va maintenant être décrite en référence aux figures 3 à 9, a pour but de remédier au problème décrit ci-dessus.

À cet effet, pour chaque rail 18, la structure de plancher 14 comporte au moins une structure alvéolaire de support 60 présentant une première extrémité 62 reposant sur le fond 28 du logement 24, et une deuxième extrémité 64 opposée à la première extrémité 62 et supportant un élément de recouvrement 66, comme le montre en particulier la figure 3A.

La structure alvéolaire de support 60 comporte des alvéoles 68 s'étendant de préférence dans une direction allant de la première extrémité 62 vers la deuxième extrémité 64, correspondant à la direction verticale Z. La structure alvéolaire de support 60 présente ainsi une direction de travail W parallèle à la direction allant de la première extrémité 62 vers la deuxième extrémité 64, et permet donc de supporter les charges susceptibles de circuler sur l'élément de recouvrement 66 de manière optimale, et donc d'éviter ou au moins de limiter au mieux les risques d'affaissement de ce dernier.

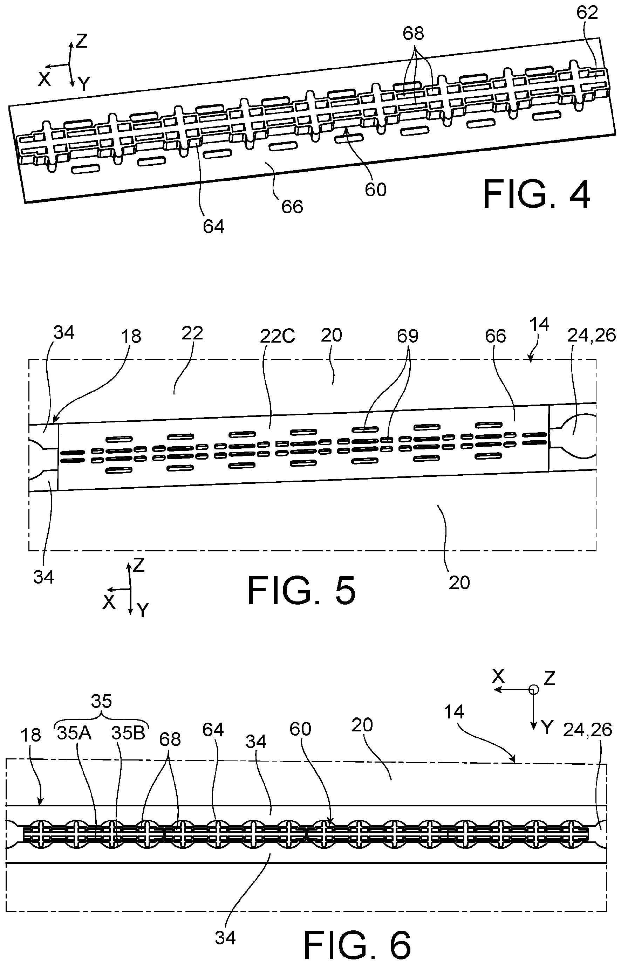

Dans l'exemple illustré, les alvéoles 68 débouchent au travers de la première extrémité 62 et de la deuxième extrémité 64, et donc en particulier au travers de l'élément de recouvrement 66, lequel comporte des ouvertures 69 à cet effet (figure 5).

En variante, d'autres formes et/ou orientations des alvéoles 68 sont possibles sans sortir du cadre de l'invention, en fonction notamment de la fermeté d'appui recherchée pour l'élément de recouvrement 66, de la masse volumique du matériau constituant la structure alvéolaire 68 et, le cas échéant, du produit anticorrosion destiné à remplir les alvéoles ou tout au moins à recouvrir les surfaces délimitant le logement 24, comme cela apparaîtra plus clairement dans ce qui suit, ou encore de la fluidité dudit produit anticorrosion, qui conditionne la faculté dudit produit à se répandre sur les surfaces à protéger.

De préférence, la structure alvéolaire de support 60 est réalisée en un matériau plastique, ce qui permet de limiter la masse de la structure de plancher.

Pour chaque rail 18, un ou plusieurs segments du logement 24, qui sont dépourvus d'élément de fixation, comportent chacun une ou plusieurs structures alvéolaires de support 60, et sont chacun recouverts par un ou plusieurs éléments de recouvrement 66. Un ou plusieurs rails 18 de la structure de plancher peuvent être totalement dépourvus d'élément de fixation, auquel cas une ou plusieurs structures alvéolaires de support 60 occupent l'intégralité du logement 24 défini par un tel rail, et un ou plusieurs éléments de recouvrement 66 recouvrent l'intégralité du logement 24.

Dans un premier mode de réalisation préféré de l'invention, l'élément de recouvrement 66 est formé d'un seul tenant avec la structure alvéolaire de support 60. La pièce ainsi constituée est représentée seule sur la figure 4, et est représentée en place dans le logement 24 d'un rail 18 sur la figure 5.

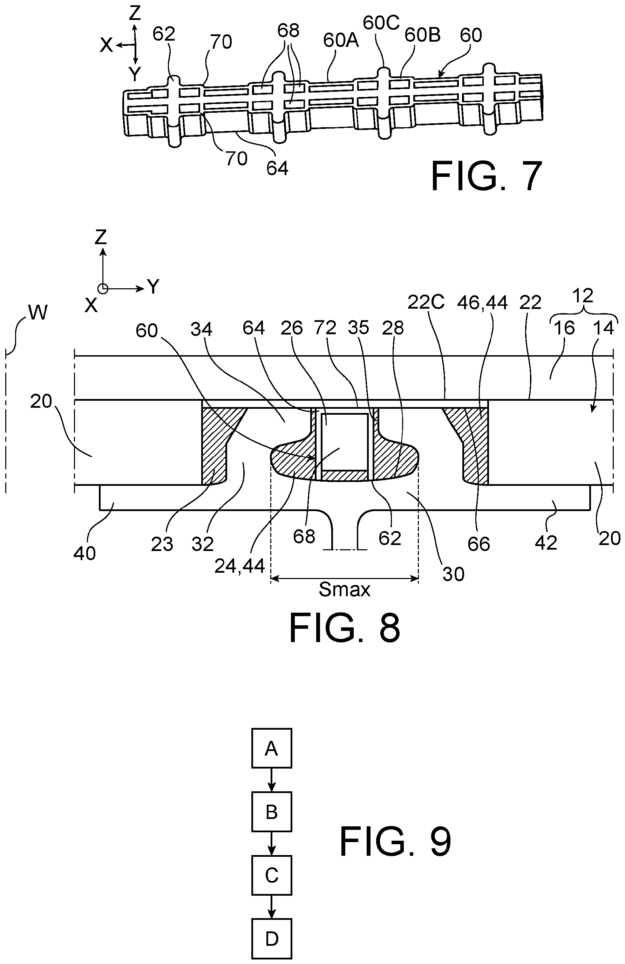

Dans un deuxième mode de réalisation préféré de l'invention, l'élément de recouvrement 66 est formé indépendamment de la structure alvéolaire de support 60. Cette dernière est visible seule, sur la figure 7, et est visible au sein du logement 24 d'un rail 18 dont l'élément de recouvrement 66 a été retiré, sur la figure 6. Comme cela apparaît plus clairement sur la figure 6, les bords 35 respectifs des lèvres 32 présentent une alternance de dents 35A et d'évidements concaves 35B destinés à la rétention axiale d'éléments de fixation au sein du logement 24. La structure alvéolaire de support 60 est adaptée pour occuper au mieux l'espace délimité par l'ouverture 26 formée entre les bords 35 et constituer ainsi un support optimal pour l'élément de recouvrement 66. Ainsi, comme le montre la figure 7, cette structure comprend une alternance de premières portions rectangulaires 60A, et de deuxièmes portions rectangulaires 60B plus larges que les premières portions rectangulaires 60A, vues de dessus. Ces deuxièmes portions rectangulaires 60B comportent en outre chacune deux nervures latérales opposées, par exemple formées par une paroi médiane de partition 60C correspondante s'étendant au-delà de chaque côté latéral de la deuxième portion rectangulaire. Chaque jonction entre une première portion rectangulaire 60A et une deuxième portion rectangulaire 60B adjacente définit deux épaulements 70 correspondants constituant chacun une butée vis-à-vis d'un coin correspondant d'une dent 35A d'un bord 35 correspondant.

Dans les deux cas, la structure alvéolaire de support 60 est de préférence noyée dans un produit anticorrosion 44 remplissant le segment correspondant du logement 24 (ce produit anticorrosion correspondant aux zones hachurées sur la figure 3A).

Le caractère traversant des alvéoles 68 permet de faciliter au mieux la répartition du produit anticorrosion 44 dans le logement 24 autour et au sein de la structure alvéolaire de support 60, sur les surfaces à protéger contre la corrosion.

Par ailleurs, du fait du soutien offert par la structure alvéolaire de support 60, l'élément de recouvrement 66 peut être de conception moins rigide, et en particulier plus mince, que dans l'état de la technique. L'élément de recouvrement 66 est par exemple constitué d'une simple bande de polyester.

Ainsi, l'élément de recouvrement 66 peut en particulier être disposé sensiblement affleurant par rapport à la surface portante 22. À cet effet, l'élément de recouvrement 66 est avantageusement logé dans l'espace 23 défini entre les deux panneaux de plancher 20.

Il en résulte une réduction de la marche générée par rapport à la surface portante 22, voire en l'occurrence une absence totale de marche par rapport à la surface portante 22.

Le confort est ainsi accru pour les usagers, et la durée de vie du revêtement 16 est rallongée du fait de l'absence d'endommagements lors des passages répétés de personnes ou de chariots au-dessus d'un rail 18.

Un autre avantage de l'invention réside dans le fait que la présence d'une structure alvéolaire de support 60 dans un logement 24 correspondant réduit la quantité de produit anticorrosion nécessaire pour remplir le logement.

Comme expliqué ci-dessus, la géométrie des alvéoles de la structure alvéolaire de support 60 est adaptable, notamment en fonction de caractéristiques du produit anticorrosion 44 utilisé.

Par exemple, les alvéoles 68 ne sont pas nécessairement traversantes. Une variante de l'invention, illustrée sur la figure 8, prévoit ainsi notamment que la structure alvéolaire de support 60 présente une surface supérieure 72 pleine et soit ainsi fermée du côté supérieur, et que du produit anticorrosion (hachures sur la figure 8) soit disposé préférentiellement sur toute surface délimitant le logement 24 et qui serait sans cela exposée à l'air, donc au moins de chaque côté de la structure alvéolaire de support 60 et au-dessous de ladite structure, sans remplir totalement les alvéoles 68. La structure alvéolaire de support 60 repose ainsi par son côté ouvert sur une couche de produit anticorrosion, de sorte que de l'air se trouve emprisonné au sein de chacune des alvéoles 68 au-dessus de la couche de produit anticorrosion. Une telle configuration permet une économie supplémentaire de produit anticorrosion et une réduction de masse additionnelle, sans accroître le risque de corrosion. Il est à noter que la structure alvéolaire de support 60 selon l'exemple illustré sur la figure 8 comporte une unique rangée longitudinale d'alvéoles, de sorte qu'une seule alvéole est visible en section transversale sur la figure 8.

La structure alvéolaire de support 60, et le cas échéant, l'élément de recouvrement 66, peut être fabriqué par toute technique appropriée, notamment par fabrication additive, moulage par injection, etc.

L'invention est bien entendu applicable à d'autres types de structures de plancher pour aéronefs, par exemple aux structures dans lesquelles les rails sont intégrés aux panneaux de plancher, comme décrit dans le document US8544794B2. En variante, le rail peut être d'un type différent, par exemple du type décrit dans le document FR2953485A1, dans lequel le rail délimite le côté supérieur du logement tandis que d'autres éléments de structure non décrits délimitent les côtés latéraux et le côté inférieur du logement. Un tel rail comporte une pluralité d'ouvertures, par exemple de forme circulaire.

En référence à la figure 9 et aux figures 3 à 8, la fabrication d'une structure de plancher 14 du type décrit ci-dessus comprend des étapes de :
A) mise à disposition d'un rail 18 définissant un logement 24 présentant une ouverture 26 d'un côté supérieur et un fond 28 opposé à l'ouverture, l'ouverture 26 étant de préférence de section plus étroite qu'une section maximale Smax du logement 24 définie entre l'ouverture 26 et le fond 28 du logement de manière à permettre la rétention d'éléments de fixation au sein du logement ;
B) intégration du rail 18 dans une structure de plancher de base présentant, d'un côté supérieur, une surface portante 22, de telle sorte que l'ouverture 26 du logement 24 du rail débouche dans la surface portante 22 ;
C) mise en place d'une structure alvéolaire de support 60 dans au moins un segment du logement 24 du rail, de telle sorte que la structure alvéolaire de support présente une première extrémité 62 reposant sur le fond 28 du logement, et une deuxième extrémité 64 opposée à la première extrémité, la structure alvéolaire de support 60 comportant de préférence des alvéoles 68 s'étendant selon une direction allant de la première extrémité vers la deuxième extrémité ;
D) le cas échéant, agencement d'un produit anticorrosion 44 dans le logement 24 au moins sous la structure alvéolaire de support 60 et de part et d'autre de la structure alvéolaire de support 60 ;
E) le cas échéant, mise en place d'au moins un élément de recouvrement 66 sur la deuxième extrémité 64 de la structure alvéolaire de support 60, de manière à procurer une surface portante complémentaire 22C au-dessus de l'ouverture 26 du logement 24.

L'étape C de mise en place de la structure alvéolaire de support 60 peut être mise en œuvre après ou avant l'étape B d'intégration du rail dans la structure de plancher de base, cette dernière devant s'entendre comme étant la structure de plancher éventuellement dépourvue de structure alvéolaire de support 60 et d'élément de recouvrement 66.

L'étape D de mise en place du produit anticorrosion 44 peut être mise en œuvre après ou avant l'étape C de mise en place de la structure alvéolaire de support 60.

L'étape E de mise en place d'au moins un élément de recouvrement 66 n'est bien entendu applicable que lorsqu'un tel élément de recouvrement n'est pas intégré à la structure alvéolaire de support 60 et n'a donc pas déjà été mis en place concomitamment à cette dernière. Cette étape peut être mise en œuvre après ou avant l'étape B d'intégration du rail dans la structure de plancher de base.

## Revendications

1. Structure de plancher (14) pour aéronef, présentant, d'un côté supérieur, une surface portante (22), et comportant :
- au moins un rail (18) délimitant un logement (24) présentant au moins une ouverture (26) du côté supérieur et un fond (28) opposé à l'ouverture et destiné à loger un ou plusieurs éléments de fixation ; et
- au moins un élément de recouvrement (66) agencé au-dessus d'au moins un segment du logement (24) de manière à procurer une surface portante complémentaire (22C) au-dessus de l'ouverture ;
**caractérisée en ce qu'**elle comprend au moins une structure alvéolaire de support (60) présentant une première extrémité (62) reposant sur le fond (28) du logement, et une deuxième extrémité (64) opposée à la première extrémité et supportant l'élément de recouvrement (66).

2. Structure de plancher selon la revendication 1, dans laquelle la structure alvéolaire de support comporte des alvéoles (68) s'étendant selon une direction allant de la première extrémité vers la deuxième extrémité.

3. Structure de plancher selon la revendication 1 ou 2, dans laquelle un produit anticorrosion (44) est disposé dans le logement (24) au moins sous la structure alvéolaire de support (60) et de part et d'autre de la structure alvéolaire de support (60).

4. Structure de plancher selon l'une quelconque des revendications 1 à 3, dans laquelle l'élément de recouvrement (66) est formé d'un seul tenant avec la structure alvéolaire de support (60).

5. Structure de plancher selon l'une quelconque des revendications 1 à 3, dans laquelle l'élément de recouvrement (66) est formé indépendamment de la structure alvéolaire de support (60).

6. Structure de plancher selon l'une quelconque des revendications 1 à 5, dans laquelle l'élément de recouvrement (66) affleure la surface portante (22).

7. Structure de plancher selon l'une quelconque des revendications 1 à 6, comprenant au moins deux panneaux de plancher (20) définissant la surface portante (22), et dans laquelle le rail (18) s'étend dans un espace (23) défini entre les deux panneaux de plancher.

8. Structure de plancher selon la revendication 7, dans laquelle l'élément de recouvrement (66) est logé dans l'espace (23) défini entre les deux panneaux de plancher (20).

9. Structure de plancher selon l'une quelconque des revendications 1 à 8, dans laquelle le logement (24) est une rainure définie par le rail (18), et l'ouverture (26) est une ouverture longitudinale définie entre deux lèvres supérieures (32) du rail (18).

10. Structure de plancher selon l'une quelconque des revendications 1 à 9, dans laquelle, l'ouverture (26) du logement (24) est de section transversale plus étroite qu'une section transversale maximale (Smax) du logement (24) définie entre l'ouverture (26) et le fond (28) du logement de manière à permettre la rétention d'éléments de fixation au sein du logement par effet de butée.

11. Aéronef, comprenant une structure de plancher (14) selon l'une quelconque des revendications 1 à 10.

12. Procédé de fabrication d'une structure de plancher (14) pour aéronef, comprenant des étapes de :
A) mise à disposition d'un rail (18) définissant un logement (24) présentant une ouverture (26) d'un côté supérieur et un fond (28) opposé à l'ouverture et destiné à loger un ou plusieurs éléments de fixation ;
B) intégration du rail (18) dans une structure de plancher de base présentant, d'un côté supérieur, une surface portante (22), de telle sorte que l'ouverture (26) du logement (24) du rail débouche dans la surface portante (22) ;
C) mise en place, avant ou après l'étape B, d'une structure alvéolaire de support (60) dans au moins un segment du logement (24) du rail, de telle sorte que la structure alvéolaire de support présente une première extrémité (62) reposant sur le fond (28) du logement, et une deuxième extrémité (64) opposée à la première extrémité (62) ;
et dans lequel, au terme du procédé, au moins un élément de recouvrement (66) est supporté par la deuxième extrémité (64) de la structure alvéolaire de support, de manière à procurer une surface portante complémentaire (22C) au-dessus de l'ouverture (26) du logement.

13. Procédé selon la revendication 12, comprenant en outre une étape d'agencement d'un produit anticorrosion (44) dans le logement (24) au moins sous la structure alvéolaire de support (60) et de part et d'autre de la structure alvéolaire de support (60).

## Patentansprüche

1. Bodenstruktur (14) für ein Luftfahrzeug, welche auf einer Oberseite eine tragende Fläche (22) aufweist und umfasst:
- wenigstens eine Schiene (18), die einen Aufnahmeraum (24) begrenzt, der wenigstens eine Öffnung (26) an der Oberseite und einen der Öffnung gegenüberliegenden Boden (28) aufweist und dazu bestimmt ist, ein oder mehrere Befestigungselemente aufzunehmen; und
- wenigstens ein Abdeckelement (66), das oberhalb wenigstens eines Segments des Aufnahmeraumes (24) so angeordnet ist, dass es eine zusätzliche tragende Fläche (22C) oberhalb der Öffnung bereitstellt;
**dadurch gekennzeichnet, dass** sie wenigstens eine Stützwabenstruktur (60) umfasst, die ein erstes Ende (62), das auf dem Boden (28) des Aufnahmeraumes ruht, und ein zweites Ende (64), das dem ersten Ende gegenüberliegt und das Abdeckelement (66) stützt, aufweist.

2. Bodenstruktur nach Anspruch 1, wobei die Stützwabenstruktur Waben (68) umfasst, die sich in einer Richtung vom ersten Ende zum zweiten Ende hin erstrecken.

3. Bodenstruktur nach Anspruch 1 oder 2, wobei ein Korrosionsschutzmittel (44) im Aufnahmeraum (24) wenigstens unter der Stützwabenstruktur (60) und beiderseits der Stützwabenstruktur (60) angeordnet ist.

4. Bodenstruktur nach einem der Ansprüche 1 bis 3, wobei das Abdeckelement (66) mit der Stützwabenstruktur (60) aus einem Stück ausgebildet ist.

5. Bodenstruktur nach einem der Ansprüche 1 bis 3, wobei das Abdeckelement (66) unabhängig von der Stützwabenstruktur (60) ausgebildet ist.

6. Bodenstruktur nach einem der Ansprüche 1 bis 5, wobei das Abdeckelement (66) mit der tragenden Fläche (22) bündig ist.

7. Bodenstruktur nach einem der Ansprüche 1 bis 6, welche wenigstens zwei Bodenplatten (20) umfasst, welche die tragende Fläche (22) definieren, und wobei sich die Schiene (18) in einem Raum (23) erstreckt, der zwischen den zwei Bodenplatten definiert ist.

8. Bodenstruktur nach Anspruch 7, wobei das Abdeckelement (66) in dem Raum (23) aufgenommen ist, der zwischen den zwei Bodenplatten (20) definiert ist.

9. Bodenstruktur nach einem der Ansprüche 1 bis 8, wobei der Aufnahmeraum (24) eine durch die Schiene (18) definierte Nut ist und die Öffnung (26) eine längliche Öffnung ist, die zwischen zwei oberen Schenkeln (32) der Schiene (18) definiert ist.

10. Bodenstruktur nach einem der Ansprüche 1 bis 9, wobei die Öffnung (26) des Aufnahmeraumes (24) einen Querschnitt aufweist, der schmaler als ein zwischen der Öffnung (26) und dem Boden (28) des Aufnahmeraumes definierter maximaler Querschnitt (Smax) des Aufnahmeraumes (24) ist, so dass das Halten von Befestigungselementen innerhalb des Aufnahmeraumes durch Anschlagwirkung ermöglicht wird.

11. Luftfahrzeug, welches eine Bodenstruktur (14) nach einem der Ansprüche 1 bis 10 umfasst.

12. Verfahren zur Herstellung einer Bodenstruktur (14) für ein Luftfahrzeug, welches die Schritte umfasst:
A) Bereitstellen einer Schiene (18), die einen Aufnahmeraum (24) definiert, der eine Öffnung (26) an einer Oberseite und einen der Öffnung gegenüberliegenden Boden (28) aufweist und dazu bestimmt ist, ein oder mehrere Befestigungselemente aufzunehmen;
B) Integrieren der Schiene (18) in eine Bodengrundstruktur, die auf einer Oberseite eine tragende Fläche (22) aufweist, derart, dass die Öffnung (26) des Aufnahmeraumes (24) der Schiene auf der tragenden Fläche (22) mündet;
C) Anbringen, vor oder nach Schritt B, einer Stützwabenstruktur (60) in wenigstens einem Segment des Aufnahmeraumes (24) der Schiene, derart, dass die Stützwabenstruktur ein erstes Ende (62), das auf dem Boden (28) des Aufnahmeraumes ruht, und ein zweites Ende (64), das dem ersten Ende (62) gegenüberliegt, aufweist; und wobei am Ende des Verfahrens wenigstens ein Abdeckelement (66) vom zweiten Ende (64) der Stützwabenstruktur gestützt wird, so dass eine zusätzliche tragende Fläche (22C) oberhalb der Öffnung (26) des Aufnahmeraumes bereitgestellt wird.

13. Verfahren nach Anspruch 12, welches außerdem einen Schritt des Anordnens eines Korrosionsschutzmittels (44) im Aufnahmeraum (24) wenigstens unter der Stützwabenstruktur (60) und beiderseits der Stützwabenstruktur (60) umfasst.

## Claims

1. Floor structure (14) for an aircraft, having, on a top side, a bearing surface (22), and comprising:
- at least one rail (18) delimiting a recess (24) having at least one opening (26) on the top side and a bottom (28) opposite the opening and intended to house one or more attachment elements; and
at least one covering element (66) arranged above at least one segment of the recess (24) in order to provide a complementary bearing surface (22C) above the opening;
**characterized in that** it comprises at least one cellular supporting structure (60) having a first end (62) that rests on the bottom (28) of the recess, and a second end (64) opposite the first end and supporting the covering element (66).

2. Floor structure according to claim 1, in which the cellular supporting structure comprises cells (68) extending in a direction going from the first end to the second end.

3. Floor structure according to claim 1 or 2, in which an anticorrosion product (44) is disposed in the recess (24) at least under the cellular supporting structure (60) and on either side of the cellular supporting structure (60).

4. Floor structure according to any of the claims 1 to 3, in which the covering element (66) is formed in a single piece with the cellular supporting structure (60).

5. Floor structure according to any of the claims 1 to 3, in which the covering element (66) is formed independently of the cellular supporting structure (60).

6. Floor structure according to any of the claims 1 to 5, in which the covering element (66) is flush with the bearing surface (22).

7. Floor structure according to any of claims 1 to 6, comprising at least two floor panels (20) defining the bearing surface (22), and in which the rail (18) extends in a space (23) defined between the two floor panels.

8. Floor structure according to claim 7, in which the covering element (66) is housed in the space (23) defined between the two floor panels (20).

9. Floor structure according to any of claims 1 to 8, in which the recess (24) is a groove defined by the rail (18), and the opening (26) is a longitudinal opening defined between two top lips (32) of the rail (18).

10. Floor structure according to any of claims 1 to 9, in which the opening (26) of the recess (24) has a narrower cross section than a maximum cross section (Smax) of the recess (24) defined between the opening (26) and the bottom (28) of the recess in order to allow retention of attachment elements within the recess by abutment effect.

11. Aircraft comprising a floor structure according to any of claims 1 to 10.

12. Method for manufacturing a floor structure (14) for an aircraft, comprising steps of:
A) providing a rail (18) defining a recess (24) having an opening (26) on a top side and a bottom (28) opposite the opening and intended to house one or more attachment elements;
B) incorporating the rail (18) in a base floor structure having, on a top side, a bearing surface (22), such that the opening (26) of the recess (24) of the rail emerges in the bearing surface (22);
C) placing, before or after the step B, a cellular supporting structure (60) in at least one segment of the recess (24) of the rail, such that the cellular supporting structure has a first end (62) that rests on the bottom (28) of the recess, and a second end (64) opposite the first end (32); and
in which, at an end of the method, at least one covering element (66) is supported by the second end (64) of the cellular supporting structure, in order to provide a complementary bearing surface (22C) above the opening (26) of the recess.

13. Method according to claim 12, further comprising a step of arranging an anticorrosion product (44) in the recess (24) at least under the cellular supporting structure (60) and on either side of the cellular supporting structure (60).
